# EUROPEAN PATENT SPECIFICATION

(11) **EP 4 235 919 B1**
(45) Date of publication and mention of the grant of the patent: **22.07.2026**
(21) Application number: 23182314.7
(22) Date of filing: 30.04.2021
(51) Int. Cl.: H01M 50/147, H01M 50/166, H01M 50/148, H01M 50/15, H01M 50/531, H01M 50/545, H01M 50/55

(54) **BATTERY AND POWER CONSUMPTION DEVICE**
BATTERIE UND STROMVERBRAUCHSVORRICHTUNG
BATTERIE ET DISPOSITIF DE CONSOMMATION D'ÉNERGIE

(43) Date of publication of application: 30.08.2023
(62) Divisional of application: 21799163.7
(73) Proprietor: Contemporary Amperex Technology (Hong Kong) Limited, Central, Central And Western District (HK)
(72) Inventor: WANG, Lei, Ningde City, Fujian, 352100 (CN); ZHOU, Wenlin, Ningde City, Fujian, 352100 (CN); LI, Xing, Ningde City, Fujian, 352100 (CN); WANG, Peng, Ningde City, Fujian, 352100 (CN); LI, Quankun, Ningde City, Fujian, 352100 (CN); CHEN, Xingdi, Ningde City, Fujian, 352100 (CN); ZHENG, Yulian, Ningde City, Fujian, 352100 (CN)
(74) Representative: Herrero & Asociados, S.L.

(56) References cited:
- CN-A- 112 310 517
- CN-U- 209 087 917
- CN-U- 209 747 685
- CN-U- 211 376 679
- US-A1- 2016 133 886

## Description

### FIELD OF TECHNOLOGY

This application relates to the technical field of batteries, and more specifically, to a battery cell, a battery, a power consumption device, and a battery manufacturing method and device.

### BACKGROUND

Batteries are widely used in electronic devices, such as mobile phones, notebook computers, storage battery cars, electric vehicles, electric airplanes, electric ships, electric toy cars, electric toy ships, electric toy airplanes, and electric tools.

In battery technologies, both safety and performance of the battery need to be considered, and energy density of the battery affects the performance of the battery. Therefore, how to increase the energy density of the battery is a technical problem that needs to be resolved urgently in battery technologies. CN211376679U, CN209747685U and CN209087917U disclosed a battery.

### SUMMARY

The invention is set out in the appended set of claims.

### BRIEF DESCRIPTION OF THE DRAWINGS

To illustrate the technical solutions of the embodiments of this application more clearly, the following will briefly introduce the drawings that need to be used in the embodiments of this application. Obviously, the drawings described below are merely some embodiments of this application, and for a person of ordinary skill in the art, other drawings may also be obtained based on the drawings without creative work.
FIG. 1 is a schematic structural view of a vehicle according to some embodiments of this application;
FIG. 2 is a schematic structural view of a battery according to some embodiments of this application;
FIG. 3 is a schematic structural view of a battery module in FIG. 2;
FIG. 4 is an exploded view of a battery cell according to some embodiments of this application;
FIG. 5 is a partially sectioned view of a battery cell shown in FIG. 4;
FIG. 6 is an exploded view of an end cover assembly shown in FIG. 5;
FIG. 7 is a partially enlarged view of A of a battery cell shown in FIG. 5;
FIG. 8 is a schematic view of connection between a battery cell and a thermal management component shown in FIG. 5;
FIG. 9 is a schematic structural view of an end cover shown in FIG. 8;
FIG. 10 is a schematic view of installation of a battery according to some embodiments of this application;
FIG. 11 is a flowchart of a battery manufacturing method according to some embodiments of this application;
FIG. 12 is a flowchart of a battery manufacturing method according to some other embodiments of this application; and
FIG. 13 is a schematic block view of a battery manufacturing device according to some embodiments of this application.

In the drawings, the views are not drawn to actual scale.

### DETAILED DESCRIPTION OF THE EMBODIMENTS

To make objectives, technical solutions, and advantages of the embodiments of this application clearer, the technical solutions in the embodiments of this application will be clearly described below in combination with the accompanying drawings in the embodiments of this application.

In this application, the battery cell may include a lithium ion secondary battery, a lithium ion primary battery, a lithium sulfur battery, a sodium lithium ion battery, a sodium ion battery, a magnesium ion battery, or the like. The embodiments of this application set no limitation thereto. The battery cell may be cylindrical, flat, rectangular, or in other shapes. The embodiments of this application also set no limitation thereto. The battery cells are usually divided into three types according to encapsulation methods: a cylindrical battery cell, a square battery cell, and a soft pack battery cell. The embodiments of this application set no limitation thereto.

The battery mentioned in the embodiments of this application refers to a single physical module that includes one or more battery cells to provide higher voltage and capacity. For example, the battery mentioned in this application may include a battery module, a battery pack, or the like. The battery usually includes a box body for encapsulating one or more battery cells. The box body may prevent liquid or other foreign matters from affecting charging or discharging of the battery cell.

The battery cell includes an electrode assembly and an electrolyte solution. The electrode assembly includes a positive electrode plate, a negative electrode plate, and an isolating membrane. The battery cell mainly operates by metal ions moving between the positive electrode plate and the negative electrode plate. The positive electrode plate includes positive current collectors and positive active substance layers. The positive active substance layer is coated on a surface of the positive current collector. A positive current collector that is not coated with the positive active substance layer protrudes from the positive current collector that has been coated with the positive active substance layer, and the positive current collector that is not coated with the positive active substance layer serves as a positive tab. Taking a lithium ion battery as an example, material of the positive current collector may be aluminum, and the positive active substance may be lithium cobaltate, lithium iron phosphate, ternary lithium, lithium manganate, or the like. The negative electrode plate includes negative current collectors and negative active substance layers. The negative active substance layer is coated on a surface of the negative current collector. A negative current collector that is not coated with the negative active substance layer protrudes from the negative current collector that has been coated with the negative active substance layer, and the negative current collector that is not coated with the negative active substance layer serves as a negative tab. Material of the negative current collector may be copper, and negative active substance may be carbon, silicon, or the like. To ensure that large currents are passed without fusing, there are a plurality of positive tabs stacked together, and there are also a plurality of negative tabs stacked together. Material of the isolating membrane may be polypropylene (PP), polyethylene (PE), or the like. In addition, the electrode assembly may be in a winding structure or a laminated structure. This is not limited in the embodiments of this application.

Many design factors should also be considered in development of battery technologies, for example, performance parameters such as cycle life, discharge capacity, charge and discharge rate, and energy density.

At present, the battery cell usually includes a housing, an electrode assembly, and an end cover assembly. The end cover assembly covers an opening of the housing to provide a hermetic space for the electrode assembly and the electrolyte solution.

The applicant found that in the battery cell, after the opening of the housing is covered with the end cover assembly, the tab of the electrode assembly is located in the housing, and the tab occupies a part of the space inside the housing. As a result, the space inside the housing that can be provided to a main body portion of the electrode assembly is reduced, resulting in a reduced energy density of the battery cell.

In view of this, the embodiments of this application provide a technical solution. The battery cell includes a housing, an electrode assembly, and an end cover assembly. The electrode assembly is configured to be accommodated in the housing, and the electrode assembly includes a main body portion and a tab. The end cover assembly includes an end cover and an electrode terminal, where the end cover is configured to cover the opening, the electrode terminal is mounted on the end cover, and the electrode terminal is configured to be electrically connected to the tab. The end cover includes a first body and a first protruding portion, the first body has a first inner surface and a first outer surface arranged opposite to each other in a thickness direction of the first body, the first protruding portion protrudes from the first outer surface in a direction departing from the main body portion, a first recessed portion recessed from the first inner surface in the direction departing from the main body portion is formed at a position corresponding to the first protruding portion on the first body, and the first recessed portion is configured to accommodate at least a part of the tab, so as to make more space for the main body portion of the electrode assembly, which is beneficial to increase the energy density of the battery cell.

The technical solutions described in the embodiments of this application are applicable to batteries and power consumption devices using batteries.

The power consumption devices may be vehicles, mobile phones, portable devices, notebook computers, ships, spacecrafts, electric toys, electric tools, and the like. The vehicles may be fuel vehicles, gas vehicles or new energy vehicles, the new energy vehicles may be pure electric vehicles, hybrid vehicles, extended-range vehicles, or the like; the spacecrafts include airplanes, rockets, space shuttles, spacecrafts, and the like; the electric toys include fixed or mobile electric toys such as game consoles, electric car toys, electric ship toys, electric airplane toys, and the like; the electric tools include metal cutting electric tools, grinding electric tools, assembly electric tools, and railway electric tools, for example, electric drills, electric grinders, electric wrenches, electric screwdrivers, electric hammers, electric impact drills, concrete vibrators, and electric planers. The embodiments of this application set no special limitation on the foregoing power consumption devices.

For ease of description, in the following embodiments, a vehicle is used as the electric device for description.

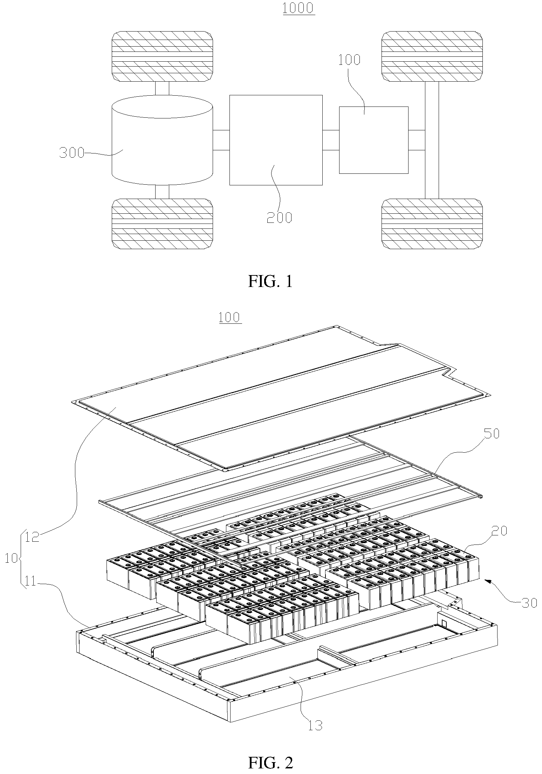

Please refer to FIG. 1, FIG. 1 is a schematic structural view of a vehicle 1000 according to some embodiments of this application. A battery 100 is provided inside the vehicle 1000, and the battery 100 may be disposed on the bottom, or head, or tail of the vehicle 1000. The battery 100 may be used to supply power to the vehicle 1000, for example, the battery 100 may be configured as an operating power source of the vehicle 1000.

The vehicle 1000 may further include a controller 200 and a motor 300. The controller 200 is used to control the battery 100 to supply power to the motor 300, for example, used to meet working power requirements of the vehicle 1000 during starting, navigating, and driving.

In some embodiments, the battery 100 may be configured not only as the operating power source for the vehicle 1000, but also as a driving power source for the vehicle 1000, replacing or partially replacing fuel or natural gas to provide driving power for the vehicle 1000.

In some embodiments, please refer to FIG. 2, FIG. 2 is a schematic structural view of a battery 100 according to some embodiments of this application. The battery 100 includes a box body 10 and a battery cell 20, and the battery cell 20 is accommodated in the box body 10.

The box body 10 may be in various shapes, such as a cylinder or a cuboid. Certainly, the box body 10 may be in various structures.

In some embodiments, the box body 10 may include a first part 11 and a second part 12, and the first part 11 and the second part 12 are covered with each other to define an accommodation space 13 for accommodating the battery cell 20. Certainly, a connection between the first part 11 and the second part 12 may be sealed by a sealing element, and the sealing element may be a sealing ring, a sealant, or the like.

The first part 11 and the second part 12 may be in various shapes, such as a cylinder or a cuboid. The first part 11 may be in a hollow structure with an opening on one side, and the second part 12 may also be in a hollow structure with an opening on one side. The opening side of the second part 12 is covered with the opening side of the first part 11 to form the box body 10 having the accommodation space 13. Certainly, the first part 11 may be in a hollow structure with an opening on one side, and the second part 12 is in a plate-shaped structure. The second part 12 is covered with the opening side of the first part 11 to form the box body 10 having the accommodation space 13.

In FIG. 2, the first part 11 is located at the bottom of the second part 12. In actual installation, when the battery 100 is turned upside down (the box body 10 is turned upside down), the battery 100 may also be turned down based on FIG. 2, so that the first part 11 is located on the top of the second part 12.

In the battery 100, there may be one or more battery cells 20. If there are a plurality of battery cells 20, the plurality of battery cells 20 may be connected in series or in parallel or in parallel-series. The parallel-series connection means that the plurality of battery cells 20 are both connected in series and in parallel.

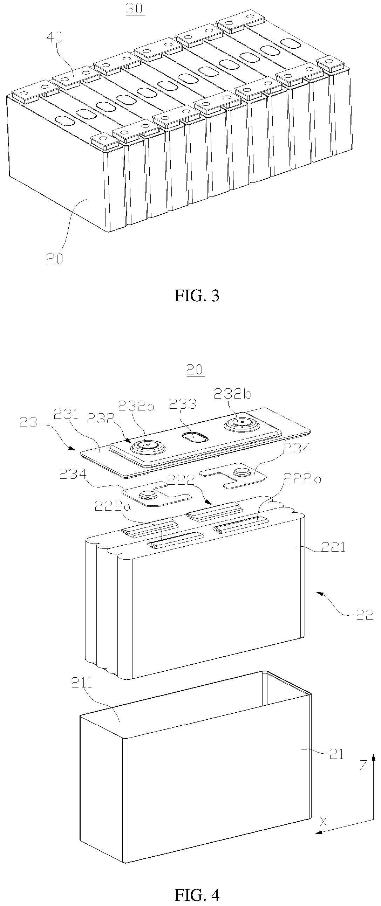

In some embodiments, please refer to FIG. 3. FIG. 3 is a schematic structural view of a battery module 30 shown in FIG. 2. The plurality of battery cells 20 may be connected in series or in parallel or in parallel-series to form the battery module 30, and then the plurality of battery modules 30 are connected in series or in parallel or in parallel-series to form an entirety and is accommodated in the box body 10 (shown in FIG. 2). In other embodiments, the plurality of battery cells 20 may also be directly connected in series or in parallel or in parallel-series, and then the entirety includes the plurality of battery cells 20 is accommodated in the box body 10.

In some embodiments, the battery 100 may further include a bus component 40, and the plurality of battery cells 20 may be electrically connected through the bus component 40 to realize connection in series or in parallel or in parallel-series of the plurality of battery cells 20.

The bus component 40 may be a metal conductor, such as copper, iron, aluminum, stainless steel, and aluminum alloy.

In some embodiments, the battery 100 may further include a thermal management component 50 (shown in FIG. 2), and the thermal management component 50 is configured to adjust a temperature of the battery cell 20.

The thermal management component 50 is a component configured to adjust the temperature of the battery cell 20. The adjusting the temperature herein refers to heating or cooling the battery cell 20, that is, the thermal management component 50 may be a heating component for heating the battery cell 20 or a cooling component for cooling the battery cell 20.

For example, the thermal management component 50 is configured to accommodate a fluid to adjust temperatures of the plurality of battery cells 20. The fluid herein may be liquid or gas, such as water, a mixture of water and ethylene glycol, or air.

The thermal management component 50 may be mounted inside the box body 10 (shown in FIG. 2), and the thermal management component 50 may be mounted in the first part 11 of the box body 10 or in the second part 12 of the box body 10.

A shape of the thermal management component 50 is not limited herein either. The thermal management component 50 may be in a shape of a flat plate as a whole, or may be formed by connecting a plurality of strip structures as long as the thermal management component 50 can conduct heat to the battery cell 20 or take away heat of the battery cell 20.

Please refer to FIG. 4. FIG. 4 is an exploded view of a battery cell 20 according to some embodiments of this application. The battery cell 20 may include a housing 21, electrode assembly 22, and an end cover assembly 23. The housing 21 has an opening, the electrode assembly 22 is accommodated in the housing 21, and the end cover assembly 23 is configured to cover the opening.

The housing 21 may be in various shapes, such as a cylinder or a cuboid. A shape of the housing 21 may be determined according to a specific shape of the electrode assembly 22. For example, if the electrode assembly 22 is in a cylindrical structure, the housing 21 may be in a cylindrical structure; if the electrode assembly 22 is in a cuboid structure, the housing 21 may be in a cuboid structure.

For example, in FIG. 4, the housing 21 is in a hollow cuboid structure with one end open.

The housing 21 may also be made of a plurality of materials, such as plastic, copper, iron, aluminum, stainless steel, or aluminum alloy. The embodiments of this application set no special limitation herein.

It should be noted that there may be one or more electrode assemblies 22 in the housing 21. For example, in FIG. 4, there are two electrode assemblies 22 in the housing 21, and the two electrode assemblies 22 are stacked in the housing 21.

In some embodiments, the electrode assembly 22 may include a main body portion 221 and a tab 222, and the tab 222 extends from the main body portion 221. The main body portion 221 may include a positive electrode plate, a negative electrode plate, and an isolating membrane. The main body portion 221 may be in a winding structure formed by winding the positive electrode plate, the isolating membrane, and the negative electrode plate. The main body portion 221 may also be in a stacking structure formed by stacking the positive electrode plate, the isolating membrane, and the negative electrode plate.

The positive electrode plate includes a positive current collector and a positive active substance layer coated on opposite sides of the positive current collector. The negative electrode plate includes a negative current collector and a negative active substance layer coated on opposite sides of the negative current collector. The main body portion 221 is a part of the electrode assembly 22 corresponding to an area where an electrode plate is coated with an active substance layer, and the tab 222 is an area where an electrode plate is not coated with the active substance layer. The tab 222 may be divided into a positive tab 222a and a negative tab 222b. The positive tab 222a is an area where the positive active substance layer is not coated on the positive electrode plate. The negative tab 222b is an area where the negative active substance layer is not coated on the negative electrode plate.

The positive tab 222a and the negative tab 222b may be located on a same side of the main body portion 221, or may be located on opposite sides of the main body portion 221 respectively. For example, FIG. 4 shows a case where the positive tab 222a and the negative tab 222b are located on the same side of the main body portion 221.

The isolating membrane is provided with a large number of penetrating micropores to allow electrolyte ions to pass through freely. Material of the isolating membrane may be polypropylene (PP), polyethylene (PE), or the like.

In some embodiments, please continue to refer to FIG. 4, the end cover assembly 23 may include an end cover 231 and an electrode terminal 232. The end cover 231 is configured to cover an opening of the housing 21. The electrode terminal 232 is mounted on the end cover 231, the electrode terminal 232 is used to be electrically connected to the tab 222, and the electrode terminal 232 is configured to output electric energy of the battery cell 20.

The end cover 231 covers the opening of the housing 21 to form a hermetic space 211 for accommodating the electrode assembly 22 and an electrolyte. The electrolyte may be an electrolyte solution.

There may be one or more electrode terminals 232 in the end cover assembly 23. Taking the end cover assembly 23 including two electrode terminals 232 as an example, and the two electrode terminals 232 may be a positive electrode terminal 232a and a negative electrode terminal 232b. The positive electrode terminal 232a is configured to be electrically connected to the positive tab 222a, and the negative electrode terminal 232b is configured to be electrically connected to the negative tab 222b.

In some embodiments, the end cover assembly 23 may further include a pressure relief mechanism 233 configured to relieve a pressure inside the battery cell 20 when an internal pressure or a temperature of the battery cell 20 reaches a threshold. The pressure relief mechanism 233 is mounted on the end cover 231.

The pressure relief mechanism 233 may be a component such as an explosion-proof valve, a rupture disc, a gas valve, or a pressure relief valve.

In some embodiments, the battery cell 20 may further include a current collecting member 234, and the electrode terminal 232 is electrically connected to the tab 222 through the current collecting member 234.

In FIG. 4, for example, the end cover assembly 23 includes two electrode terminals 232, and the two electrode terminals 232 are the positive electrode terminal 232a and the negative electrode terminal 232b. The positive electrode terminal 232a may be electrically connected to the positive tab 222a of the electrode assembly 22 through a current collecting member 234, and the negative electrode terminal 232b may be electrically connected to the negative tab 222b of the electrode assembly 22 through another current collecting member 234.

The current collecting member 234 may be a metal conductor, such as copper, iron, aluminum, stainless steel, and aluminum alloy.

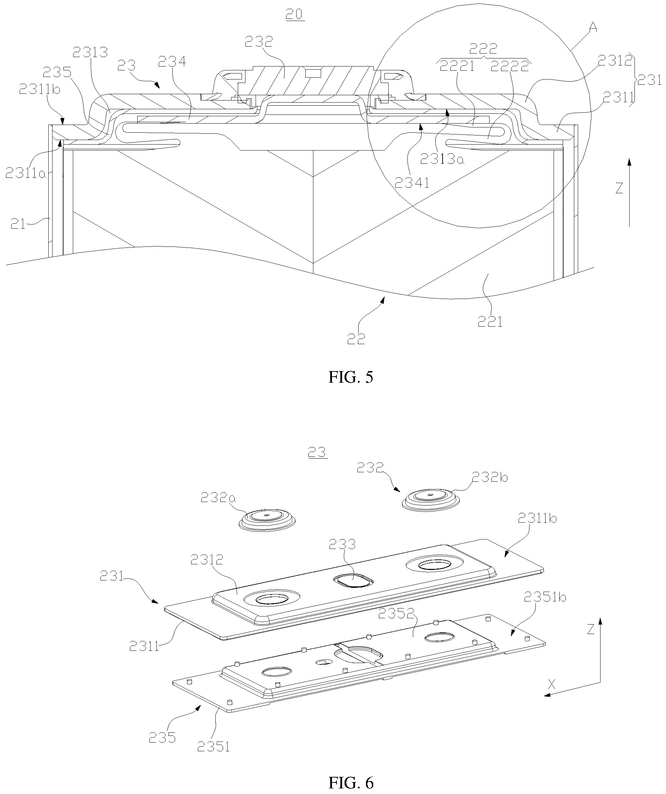

In the embodiments of this application, to increase the energy density of the battery cell 20, please refer to FIG. 5. FIG. 5 is a partially sectioned view of the battery cell 20 shown in FIG. 4. The end cover 231 includes a first body 2311 and a first protruding portion 2312, the first body 2311 has a first inner surface 2311a and a first outer surface 2311b arranged opposite to each other in a thickness direction Z of the first body, the first protruding portion 2312 protrudes from the first outer surface 2311b in a direction departing from the main body portion 221, a first recessed portion 2313 recessed from the first inner surface 2311a in the direction departing from the main body portion 221 is formed at a position corresponding to the first protruding portion 2312 on the first body 2311, and the first recessed portion 2313 is configured to accommodate at least a part of the tab 222.

Since the first recessed portion 2313 recessed from the first inner surface 2311a in the direction departing from the main body portion 221 is formed at the position corresponding to the first protruding portion 2312 on the first body 2311 of the end cover 231, and the first recessed portion 2313 can accommodate at least a part of the tab 222, so as to provide more space for the main body portion 221, which is beneficial to increase the energy density of the battery cell 20. In addition, the first protruding portion 2312 can strengthen the position where the first recessed portion 2313 is disposed on the first body 2311, thereby improving the strength of the end cover 231. The arrangement of the first protruding portion 2312 can also enable the first recessed portion 2313 to recess as far as possible in the direction departing from the main body portion 221, which is beneficial for the tab 222 to be accommodated in the first recessed portion 2313.

It should be noted that the first recessed portion 2313 serves to accommodate the tab 222. The first recessed portion 2313 may only accommodate at least a part of the positive tab 222a (not shown in FIG. 5), or may only accommodate at least a part of the negative tab 222b (not shown in FIG. 5). Certainly, the first recessed portion 2313 may also accommodate both at least a part of the positive tab 222a and at least a part of the negative tab 222b. For example, the positive tab 222a and the negative tab 222b are respectively located on opposite sides of the main body portion 221 in a thickness direction Z of the first body 2311. If the positive tab 222a is closer to the end cover 231 than the negative tab 222b, the first recessed portion 2313 can only accommodate at least a part of the positive tab 222a; if the positive tab 222a is farther from the end cover 231 than the negative tab 222b, the first recessed portion 2313 can only accommodate at least a part of the negative tab 222b. For another example, if the positive tab 222a and the negative tab 222b are located on a same side of the main body portion 221 in the thickness direction Z of the first body 2311, the first recessed portion 2313 can accommodate both at least a part of the positive tab 222a and at least a part of the negative tab 222b.

In some embodiment, please continue to refer to FIG. 5, the first recessed portion 2313 has a first bottom surface 2313a, and the first bottom surface 2313a is farther from the main body portion 221 than the first outer surface 2311b of the first body 2311 in the thickness direction Z of the first body 2311, so that the first recessed portion 2313 is recessed into the first protruding portion 2312, which increases a recess depth of the first recessed portion 2313, thereby increasing the space of the first recessed portion 2313 for accommodating the tab 222.

In other embodiments, the first bottom surface 2313a of the first recessed portion 2313 may also be flush with the first outer surface 2311b of the first body 2311; in the thickness direction Z of the first body 2311, the first bottom surface 2313a may be closer to the main body portion 221 than the first outer surface 2311b of the first body 2311.

In some embodiments, when the electrode terminal 232 is electrically connected to the tab 222 through the current collecting member 234, the tab 222 may include a first connection portion 2221 for being connected to the current collecting member 234, and at least part of the first connection portion 2221 is accommodated in the first recessed portion 2313, so as to provide more space for the main body portion 221, which is beneficial to increase the energy density of the battery cell 20.

Optionally, the current collecting member 234 has a third inner surface 2341 facing the main body portion 221, and the third inner surface 2341 is farther from the main body portion 221 than the first inner surface 2311a. This structure enables the current collecting member 234 to be accommodated in the first recessed portion 2313, and can provide more space for the main body portion 221.

For example, the first connection portion 2221 is connected to the third inner surface 2341 of the current collecting member 234. The first connection portion 2221 is entirely accommodated in the first recessed portion 2313. The first connection portion 2221 and the current collecting member 234 are stacked, and the first connection portion 2221 is located on a side of the current collecting member 234 facing the main body portion 221.

The first connection portion 2221 and the current collecting member 234 may be fixed by welding, and the current collecting member 234 and the electrode terminal 232 may also be fixed by welding.

The tab 222 may further include a second connection portion 2222, the first connection portion 2221 is connected to the main body portion 221 through the second connection portion 2222, and the first connection portion 2221 is bent relative to the second connection portion 2222. In the thickness direction Z of the first body 2311, the first connection portion 2221 is bent and arranged on a side of the second connection portion 2222 departing from the main body portion 221.

In some embodiments, please refer to FIG. 6. FIG. 6 is an exploded view of the end cover assembly 23 shown in FIG. 5, and the electrode terminal 232 is mounted on the first protruding portion 2312.

When a plurality of battery cells 20 are electrically connected through a bus component 40 (shown in FIG. 3), since the first protruding portion 2312 protrudes from the first outer surface 2311b in the direction departing from the main body portion 221, the electrode terminal 232 is mounted on the first protruding portion 2312 to facilitate connection (for example, welding) between the electrode terminal 232 and the bus component 40, and facilitate to output electric energy of the battery cell 20 through the electrode terminal 232.

In some embodiments, please continue to refer to FIG. 6, when the end cover assembly 23 includes two electrode terminals 232, a first protruding portion 2312 may be formed on the end cover 231, and the two electrode terminals 232 may be mounted on one first protruding portion 2312. This structure can simplify a structure of the end cover 231 and facilitate molding and manufacturing of the end cover 231.

In this embodiment, the two electrode terminals 232 may be arranged along a length direction X of the first body 2311, and the two electrode terminals 232 may be the positive electrode terminal 232a and the negative electrode terminal 232b. Both a current collecting member 234 (shown in FIG. 4) connected between the positive electrode terminal 232a and the positive tab 222a (shown in FIG. 4) and another current collecting member 234 (shown in FIG. 4) connected between the negative electrode terminal 232b and the negative tab 222b (shown in FIG. 4) may be at least partially accommodated in a same first recessed portion 2313 (shown in FIG. 5).

In other embodiments, when the end cover assembly 23 includes two electrode terminals 232, two first protruding portions 2312 may be formed on the end cover 231, and the two electrode terminals 232 are respectively mounted on the two first protruding portions 2312.

In this embodiment, the two electrode terminals 232 may be arranged along a length direction X of the first body 2311, and the two electrode terminals 232 may be the positive electrode terminal 232a and the negative electrode terminal 232b. A current collecting member 234 connected between the positive electrode terminal 232a and the positive tab 222a may be at least partially accommodated in the first recessed portion 2313, and another current collecting member 234 connected between the negative electrode terminal 232b and the negative tab 222b may be at least partially accommodated in another first recessed portion 2313.

It should be noted that, according to some of the foregoing embodiments, the electrode terminal 232 may be mounted on the first protruding portion 2312 of the end cover 231. In other embodiments, the electrode terminal 232 may also be mounted on other parts of the end cover 231, for example, the electrode terminal 232 is mounted on an area other than the first protruding portion 2312 on the first body 2311.

In some embodiments, please continue to refer to FIG. 6, the end cover assembly 23 may further include a first insulating piece 235. The first insulating piece 235 is disposed on a side of the end cover 231 facing the main body portion 221 (shown in FIG. 5), and the first insulating piece 235 is configured to isolate the end cover 231 from the electrode assembly 22 (shown in FIG. 5).

The first insulating piece 235 can serve to isolate the end cover 231 from the electrode assembly 22, and reduce the risk of battery cell 20 short circuit caused by contact between the end cover 231 and the electrode assembly 22.

In this embodiment, the first insulating piece 235 is made of insulating material, and the first insulating piece 235 may be made of rubber, plastic, or other materials. The end cover 231 may be made of metal, such as copper, iron, aluminum, stainless steel, and aluminum alloy.

It should be noted that, in the embodiments of this application, when the end cover assembly 23 is not provided with the first insulating piece 235, the end cover 231 may be made of insulating material.

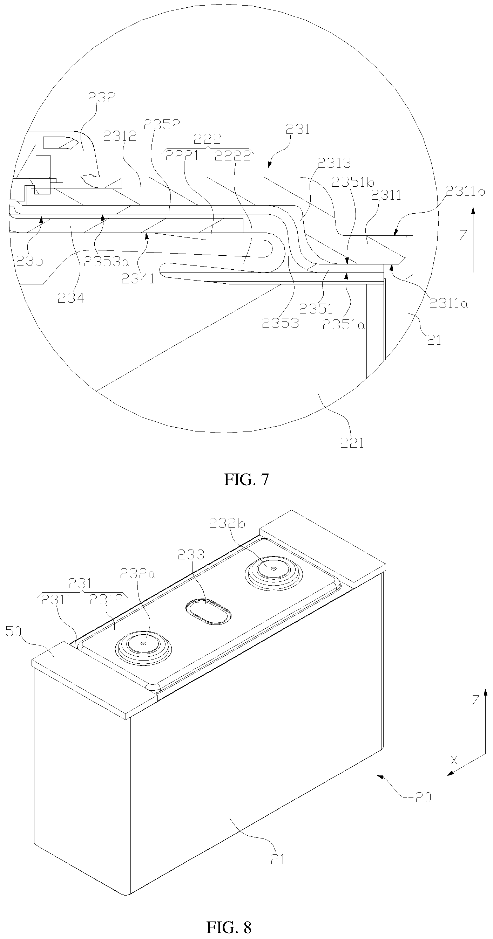

In some embodiments, please refer to FIG. 7. FIG. 7 is a partially enlarged view of A of the battery cell 20 shown in FIG. 5. The first insulating piece 235 may include a second body 2351 and a second protruding portion 2352. The second body 2351 has a second inner surface 2351a and a second outer surface 2351b arranged opposite to each other in the thickness direction Z, and the second outer surface 2351b faces the first inner surface 2311a. The second protruding portion 2352 protrudes from the second outer surface 2351b in the direction departing from the main body portion 221, and a second recessed portion 2353 recessed from the second inner surface 2351a in the direction departing from the main body portion 221 is formed at a position corresponding to the second protruding portion 2352 on the second body 2351. The first recessed portion 2313 is configured to accommodate the second protruding portion 2352, and the second recessed portion 2353 is configured to accommodate at least a part of the tab 222.

The second recessed portion 2353 of the first insulating piece 235 serves to accommodate the tab 222, so as to provide more space for the main body portion 221. The arrangement of the second protruding portion 2352 can enable the second recessed portion 2353 to recess as far as possible in the direction departing from the main body portion 221, which is beneficial for the tab 222 to be accommodated in the second recessed portion 2353. In addition, since the second protruding portion 2352 of the first insulating piece 235 is accommodated in the first recessed portion 2313, the first insulating piece 235 and the end cover 231 are more compact, and the space occupied by the first insulating piece 235 inside the housing 21 is reduced, which can provide more space for the main body portion 221, and is beneficial to increase the energy density of the battery cell 20.

The second recessed portion 2353 includes a second bottom surface 2353a, and the second bottom surface 2353a is farther from the main body portion 221 than the second outer surface 2351b, so that the second recessed portion 2353 is recessed into the second protruding portion 2352.

It should be noted that the second protruding portion 2352 of the first insulating piece 235 may be in a one-to-one correspondence with the first recessed portion 2313 of the end cover 231. For example, a second protruding portion 2352 is formed on the first insulating piece 235, a first recessed portion 2313 is formed on the end cover 231, and one first protruding portion 2312 is correspondingly accommodated in the first recessed portion 2313; for another example, two second protruding portions 2352 are formed on the first insulating piece 235, two first recessed portions 2313 are formed on the end cover 231, and the two second protruding portions 2352 are respectively accommodated in the two first recessed portions 2313. Certainly, there may be a plurality of second protruding portions 2352 accommodated in one first recessed portion 2313. For example, one first recessed portion 2313 is formed on the end cover 231, two second protruding portions 2352 are formed on the first insulating piece 235, and both of the two second protruding portions 2352 are accommodated in one first recessed portion 2313.

There may be a certain distance between the second outer surface 2351b and the first inner surface 2311a, or the second outer surface 2351b may directly abut against the first inner surface 2311a. If there is a distance between the second outer surface 2351b and the first inner surface 2311a, the second protruding portion 2352 is partially accommodated in the first recessed portion 2313; if the second outer surface 2351b abuts against the first inner surface 2311a, the second protruding portion 2352 is entirely accommodated in the first recessed portion 2313, so that the first insulating piece 235 and the end cover 231 become more compact. For example, FIG. 7 shows a situation where the second outer surface 2351b directly abuts against the first inner surface 2311a.

For example, the third inner surface 2341 of the current collecting member 234 is farther from the main body portion 221 of the electrode assembly 22 than the second inner surface 2351a of the first insulating piece 235. The first connection portion 2221 connecting the tab 222 and the current collecting member 234 is entirely located in the second recessed portion 2353.

In some embodiments, when the battery cell 20 adjusts the temperature through the thermal management component 50 (not shown in FIG. 7), the thermal management component 50 may be attached to a plurality of positions of the battery cell 20. For example, the thermal management component 50 is attached to the housing 21 of the battery cell 20. For another example, the thermal management component 50 is attached to the end cover 231 of the battery cell 20.

When the thermal management component 50 is attached to the end cover 231 of the battery cell 20, the thermal management component 50 may be attached to the first protruding portion 2312 of the end cover 231, or the thermal management component 50 may be attached to the first body 2311 of the end cover 231. The attachment herein may be only in contact but not connected together, or may be connected together.

In some embodiments, please refer to FIG. 8. FIG. 8 is a schematic view of connection between the battery cell 20 and the thermal management component 50 shown in FIG. 5. The first body 2311 of the end cover 231 is configured to be attached to the thermal management component 50, so that the battery cell 20 may transfer heat with the heat management component 50 through the first body 2311. In this way, heat transfer efficiency between the battery cell 20 and the thermal management component 50 is improved, so that the temperature of the battery cell 20 can be adjusted through the thermal management component 50.

For example, to improve stability and firmness of the battery cell 20, the first body 2311 may be connected to the thermal management component 50 through an adhesive layer, and the adhesive layer may be a thermally conductive adhesive.

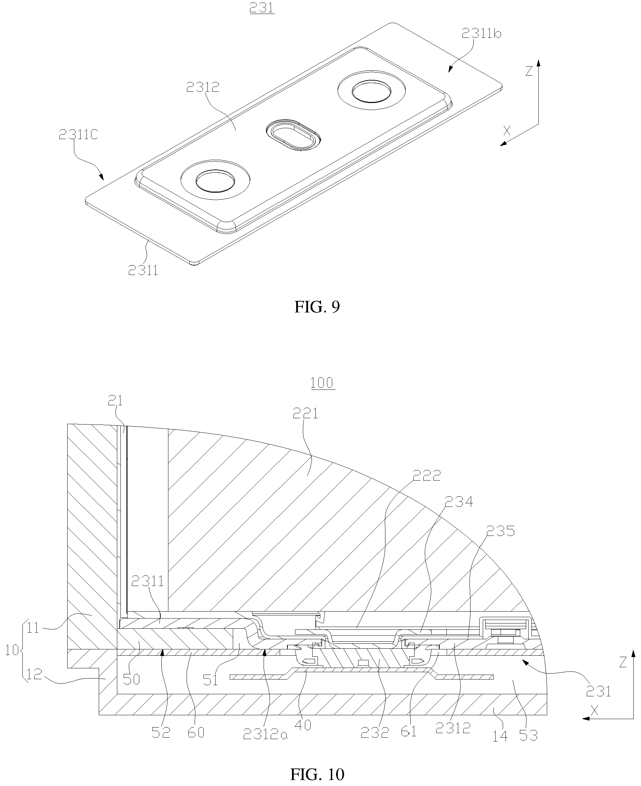

Optionally, please refer to FIG. 9. FIG. 9 is a schematic structural view of the end cover 231 shown in FIG. 8. The first outer surface 2311b of the first body 2311 includes a heat dissipation area 2311c. A projection of the heat dissipation area 2311c in the thickness direction Z of the first body 2311 does not overlap a projection of the first protruding portion 2312 in the thickness direction Z of the first body 2311, and the heat dissipation area 2311c is configured to attach to the thermal management component 50. In this structure, the thermal management component 50 does not overlap the first protruding portion 2312, and the first protruding portion 2312 and the thermal management component 50 share the space in the thickness direction Z of the first body 2311, which is beneficial to increase the energy density of the battery 100.

It should be noted that if the projection of the heat dissipation area 2311c in the thickness direction Z of the first body 2311 just borders on the projection of the first protruding portion 2312 in the thickness direction Z of the first body 2311, this also belongs a case where the projection of the heat dissipation area 2311c in the thickness direction Z of the first body 2311 does not overlap the projection of the first protruding portion 2312 in the thickness direction Z of the first body 2311.

FIG. 10 is a schematic view of installation of the battery 100 according to the present invention. The thermal management component 50 is located at the bottom of the battery cell 20. The thermal management component 50 is configured to support the first body 2311, that is, the thermal management component 50 not only serves to manage the heat of the battery cell 20 through the first body 2311, but also serves to support the first body 2311, so that the first protruding portion 2312 and the heat management component 50 share the space in the thickness direction Z of the first body 2311, which is beneficial to increase the energy density of the battery 100.

The thermal management component 50 is supported on the first body 2311. It may be understood that the battery cell 20 is in an upside-down state, so that the end cover 231 is located at the bottom of the housing 21, and the opening of the housing 21 is arranged downwards.

It may be understood that the thermal management component 50 may be connected to other structures to provide a support force for the battery cell 20. For example, the thermal management component 50 may be connected to the box body 10 to provide the support force for the battery cell 20, or a support piece may be disposed at the bottom of the box body 10 to provide the thermal management component 50 with the support force for the battery cell 20.

For example, the thermal management component 50 is provided with an avoidance hole 51 for accommodating at least a part of the first protruding portion 2312. In this structure, the battery cell 20 and the thermal management component 50 are more compact, and the first protruding portion 2312 and the thermal management component 50 share the space in the thickness direction Z of the first body 2311, which is beneficial to increase the energy density of the battery 100.

It should be noted that there may be a plurality of avoidance holes 51 on the thermal management component 50. At least a part of the electrode terminal 232 of each battery cell 20 may be accommodated in one avoidance hole 51, or at least a part of the electrode terminal 232 of the plurality of battery cells 20 is accommodated in one avoidance hole 51. For example, a plurality of battery cells 20 in the battery 100 are arranged in a plurality of rows, and at least a part of the electrode terminal 232 of each row of battery cell 20 is accommodated in one avoidance hole 51.

In some embodiments, please continue to refer to FIG. 10, the first protruding portion 2312 has a third outer surface 2312a departing from the first body 2311, and the thermal management component 50 has a fourth outer surface 52 departing from the first body 2311. In the thickness direction Z of the main body 2311, the fourth outer surface 52 is closer to the main body 221 than the third outer surface 2312a, or the fourth outer surface 52 is flush with the third outer surface 2312a.

When the battery 100 is impacted on the bottom, since in the thickness direction Z of the main body 2311, the fourth outer surface 52 is closer to the main body 221 than the third outer surface 2312a, or the fourth outer surface 52 is flush with the third outer surface 2312a, this structure enables an impact force received by the battery 100 may be transmitted to the first protruding portion 2312 to disperse the impact force through the end cover, and reduce a risk of the impact force directly acting on the thermal management component 50 and damaging the thermal management component 50.

For example, FIG. 10 shows a situation where the fourth outer surface 52 is flush with the third outer surface 2312a.

In some embodiments, the battery 100 may further include a second insulating piece 60, and in the thickness direction Z of the first body 2311, the second insulating piece 60 is disposed on a side of the first body 2311 departing from the main body portion 221, and the second insulating piece 60 covers the thermal management component 50 and at least part of the first protruding portion 2312.

The second insulating piece 60 has an insulating and isolating effect on the thermal management component 50 and reduces a conductive risk of the thermal management component 50. In addition, the second insulating piece 60 may also serve to block water vapor of the thermal management component 50 from entering a high-voltage connection area. The high-voltage connection area herein refers to an area where a plurality of battery cells 20 are electrically connected, for example, an area where the plurality of battery cells 20 are connected through the bus component 40. When the fourth outer surface 52 is flush with the third outer surface 2312a, the second insulating piece 60 may be attached to the fourth outer surface 52 and the third outer surface 2312a to further reduce the risk of the water vapor of the thermal management component 50 entering the high-pressure connection area.

The second insulating piece 60 is made of insulating material, and the second insulating piece 60 may be made of rubber, plastic, or other materials.

Optionally, the second insulating piece 60 is provided with a through hole 61 for the electrode terminal 232 to extend out, so as to facilitate connection between the electrode terminal 232 and the bus component 40, thereby realizing the electrical connection of the plurality of battery cells 20.

It may be understood that in this embodiment, the electrode terminal 232 is mounted on the first protruding portion 2312.

In some embodiments, an accommodation gap 53 is formed between the thermal management component 50 and a bottom wall 14 of the box body 10; and the accommodation gap 53 is configured to accommodate at least a part of the electrode terminal 232, so as to make reasonable use of the accommodation gap 53 between the thermal management component 50 and the bottom wall 14 of the box body 10, which is beneficial to increase the energy density of the battery 100. The bottom wall 14 of the box body 10 herein is a wall of the box body 10 opposite to the electrode terminal 232.

For example, the box body 10 includes a first part 11 and a second part 12, and the first part 11 and the second part 12 are covered with each other. When the battery 100 is inverted (the second part 12 is located at the bottom of the first part 11), the bottom wall 14 may be part or all of the second part 12.

It should be noted that the accommodation gap 53 is not an area formed between an entity part that is formed after the avoidance hole 51 is removed from the thermal management component 50 and the bottom wall 14, but an area formed between the bottom wall 14 and the thermal management component 50 as a whole. In other words, the accommodation gap 53 includes an area between the avoidance hole 51 and the bottom wall 14.

In some embodiments, when the plurality of battery cells 20 are electrically connected through the bus component 40, the bus component 40 may be connected to the electrode terminal 232, and the bus component 40 may be accommodated in the accommodation gap 53 as a whole to make reasonable use of the accommodation gap 53 between the thermal management component 50 and the bottom wall 14 of the box body 10, and reduce the space occupied by the bus component 40 inside the box body 10, which is beneficial to increase the energy density of the battery 100.

For example, the bus component 40 may be welded to the electrode terminal 232.

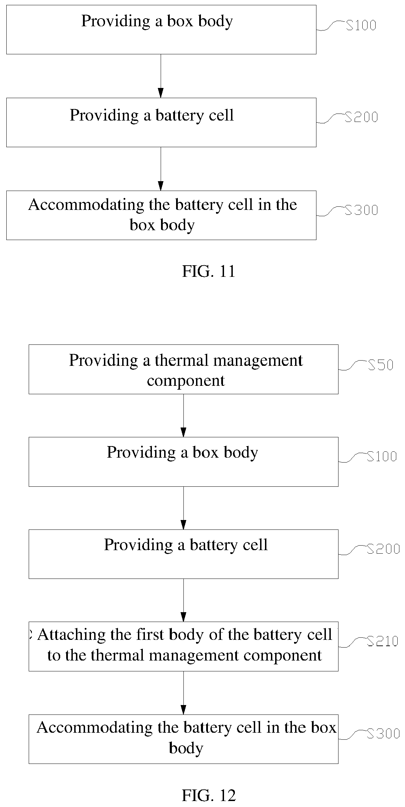

The embodiments of this application further provide a battery 100 manufacturing method. Please refer to FIG. 11, FIG. 11 is a flowchart of a battery 100 manufacturing method according to some embodiments of this application. The battery 100 manufacturing method includes:
S100: Providing a box body 10.
S200: Providing a battery cell 20.
S300: Accommodating the battery cell 20 in the box body 10.

The battery cell 20 includes a housing 21, an electrode assembly 22, and an end cover assembly 23. The housing 21 has an opening. The electrode assembly 22 is configured to be accommodated in the housing 21, and the electrode assembly 22 includes a main body portion 221 and a tab 222. The end cover assembly 23 includes an end cover 231 and an electrode terminal 232, where the end cover 231 is configured to cover the opening, the electrode terminal 232 is mounted on the end cover 231, and the electrode terminal 232 is configured to be electrically connected to the tab 222.

The end cover 231 includes a first body 2311 and a first protruding portion 2312, the first body 2311 has a first inner surface 2311a and a first outer surface 2311b arranged opposite to each other in a thickness direction Z of the first body, the first protruding portion 2312 protrudes from the first outer surface 2311b in a direction departing from the main body portion 221, a first recessed portion 2313 recessed from the first inner surface 2311a in the direction departing from the main body portion 221 is formed at a position corresponding to the first protruding portion 2312 on the first body 2311, and the first recessed portion 2313 is configured to accommodate at least a part of the tab 222.

In the foregoing method, the sequence of step S100 and step S200 is not limited. For example, step S200 may be performed first, and then step S100 is performed.

In some embodiments, please refer to FIG. 12, FIG. 12 is a flowchart of a battery 100 manufacturing method according to some other embodiments of this application. The battery 100 manufacturing method may further include:
S50: Providing a thermal management component 50, and the thermal management component 50 is configured to adjust a temperature of the battery cell 20.
S210: Attaching the first body 2311 of the battery cell 20 to the thermal management component 50.

In this embodiment, the sequence of step S50, step S100, and step S200 is not limited.

Certainly, step S210 may be performed before step S300, that is, the first body 2311 of the battery cell 20 is attached to the thermal management component 50, and then both the battery cell 20 and the thermal management component 50 are accommodated in the box body 10; step S210 may also be performed after step S300, that is, the battery cell 20 is accommodated in the box body 10, and then the first body 2311 of the battery cell 20 is attached to the thermal management component 50.

It should be noted that, for relevant structures of the battery 100 manufactured in the battery 100 manufacturing method provided in the foregoing embodiments, please refer to the battery 100 provided in the foregoing embodiments.

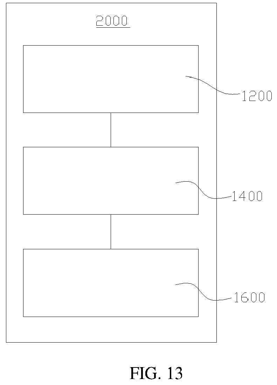

In addition, the embodiments of this application further provide a battery 100 manufacturing device 2000. Please refer to FIG. 13, FIG. 13 is a schematic block view of a battery 100 manufacturing device 2000 according to some embodiments of this application. The manufacturing device 2000 includes a first providing apparatus 1200, a second providing apparatus 1400, and an assembling apparatus 1600. The first providing apparatus 1200 is configured to provide a box body 10. The second providing apparatus 1400 is configured to provide a battery cell 20. The assembling apparatus 1600 is configured to accommodate the battery cell 20 in the box body 10.

The battery cell 20 includes a housing 21, an electrode assembly 22, and an end cover assembly 23. The housing 21 has an opening. The electrode assembly 22 is configured to be accommodated in the housing 21, and the electrode assembly 22 includes a main body portion 221 and a tab 222. The end cover assembly 23 includes an end cover 231 and an electrode terminal 232, where the end cover 231 is configured to cover the opening, the electrode terminal 232 is mounted on the end cover 231, and the electrode terminal 232 is configured to be electrically connected to the tab 222.

The end cover 231 includes a first body 2311 and a first protruding portion 2312, the first body 2311 has a first inner surface 2311a and a first outer surface 2311b arranged opposite to each other in a thickness direction Z of the first body, the first protruding portion 2312 protrudes from the first outer surface 2311b in a direction departing from the main body portion 221, a first recessed portion 2313 recessed from the first inner surface 2311a in the direction departing from the main body portion 221 is formed at a position corresponding to the first protruding portion 2312 on the first body 2311, and the first recessed portion 2313 is configured to accommodate at least a part of the tab 222.

In some embodiments, the manufacturing device 2000 may further include a third providing apparatus (not shown in the view), the third providing apparatus is configured to provide the thermal management component 50, and the assembling apparatus 1600 is further configured to attach the first body 2311 to the thermal management component 50.

It should be noted that, for relevant structures of the battery 100 manufactured through the battery 100 manufacturing device 2000 provided in the foregoing embodiments, please refer to the battery 100 provided in the foregoing embodiments.

It should be noted that the embodiments in this application and features in the embodiments may be combined with each other if there is no conflict.

The foregoing embodiments are only used to illustrate the technical solutions of this application, and are not used to limit this application. For a person skilled in the art, this application may have various modifications and changes.

## Claims

1. A battery (100), comprising:
a box body (10) and a battery cell (20), wherein the box body (10) is configured to accommodate the battery cell (20), the battery cell (20) comprises:
a housing (21) with an opening;
an electrode assembly (22) for being accommodated in the housing (21), wherein the electrode assembly (22) comprises a main body portion (221) and a tab (222); and
an end cover assembly (23), comprising an end cover (231) and an electrode terminal (232), the end cover (231) is configured to cover the opening, the electrode terminal (232) is mounted on the end cover (231), and the electrode terminal (232) is configured to be electrically connected to the tab (222), wherein
the end cover (231) comprises a first body (2311) and a first protruding portion (2312), the first body (2311) has a first inner surface (2311a) and a first outer surface (2311b) arranged opposite to each other in a thickness direction of the first body (2311), the first protruding portion (2312) protrudes from the first outer surface (2311b) in a direction departing from the main body portion (221), a first recessed portion (2313), which is recessed from the first inner surface (2311a) in the direction departing from the main body portion (221), is formed at a position corresponding to the first protruding portion (2312) on the first body (2311), and the first recessed portion (2313) is configured to accommodate at least a part of the tab (222);.
wherein the battery (100) further comprises a thermal management component (50), the thermal management component (50) is attached to the first body (2311), and the thermal management component (50) is configured to adjust a temperature of the battery cell (20); and
wherein the thermal management component (50) is located at the bottom of the battery cell (20), and the thermal management component (50) is configured to support the first body (2311).

2. The battery (100) according to claim 1, wherein the first outer surface (2311b) comprises a heat dissipation area (2311c), a projection of the heat dissipation area (2311c) in the thickness direction does not overlap a projection of the first protruding portion (2312) in the thickness direction, and the heat dissipation area (2311c) is configured to be attached to the thermal management component (50).

3. The battery (100) according to claim 1 or 2, wherein the first recessed portion (2313) has a first bottom surface (2313a); and
in the thickness direction, the first bottom surface (2313a) is farther from the main body portion (221) than the first outer surface (2311b).

4. The battery (100) according to any one of claims 1 to 3, wherein the electrode terminal (232) is mounted on the first protruding portion (2312).

5. The battery (100) according to claim 4, wherein the end cover assembly (23) comprises two electrode terminals (232), and the two electrode terminals (232) are mounted on one first protruding portion (2312); or
the end cover assembly (23) comprises two electrode terminals (232) and two first protruding portions (2312) arranged along a length direction of the first body (2311), and the two electrode terminals (232) are respectively mounted on the two first protruding portions (2312).

6. The battery (100) according to any one of claims 1 to 5, wherein the end cover assembly (23) further comprises a first insulating piece (235); and
the first insulating piece (235) is disposed on a side of the end cover (231) facing the main body portion (221), and the first insulating piece (235) is configured to isolate the end cover (231) from the electrode assembly (22).

7. The battery (100) according to any one of claims 1 to 6, wherein the battery cell (20) further comprises a current collecting member (234), and the electrode terminal (232) is electrically connected to the tab (222) through the current collecting member (234), wherein
the tab (222) comprises a first connection portion (2221) for being connected to the current collecting member (234), and at least a part of the first connection portion (2221) is accommodated in the first recessed portion (2313); and,
wherein the current collecting member (234) has a third inner surface (2341) facing the main body portion (221), and the third inner surface (2341) is farther from the main body portion (221) than the first inner surface (2311a).

8. The battery (100) according to any one of claims 1 to 7, wherein the first protruding portion (2312) has a third outer surface (2312a) departing from the first body (2311), and the heat management component (50) has a fourth outer surface (52) departing from the first body (2311); and
in the thickness direction, the fourth outer surface (52) is closer to the main body portion (221) than the third outer surface (2312a), or the fourth outer surface (52) is flush with the third outer surface (2312a).

9. The battery (100) according to any one of claims 1 to 8, wherein the battery (100) further comprises a second insulating piece (60), and in the thickness direction, the second insulating piece (60) is disposed on a side of the first body (2311) departing from the main body portion (221), and the second insulating piece (60) covers the thermal management component (50) and at least part of the first protruding portion (2312); and,
wherein the second insulating piece (60) is provided with a through hole (61) for the electrode terminal (232) to extend out.

10. The battery (100) according to any one of claims 1 to 9, wherein an accommodation gap (53) is formed between the thermal management component (50) and a bottom wall of the box body (10), and the accommodation gap (53) is configured to accommodate at least a part of the electrode terminal (232); and,
wherein the battery (100) further comprises a bus component (40), the bus component (40), is configured to realize electrical connection of a plurality of battery cells (20); and
the bus component (40), is connected to the electrode terminal (232), and the bus component (40), is entirely accommodated in the accommodation gap (53); and,
wherein the thermal management component (50) is provided with an avoidance hole (51), the avoidance hole (51) is configured to accommodate at least a part of the first protruding portion (2312).

11. A power consumption device, comprising the battery according to any one of claims 1 to 10.

## Patentansprüche

1. Batterie (100), umfassend:
einen Gehäusekörper (10) und eine Batteriezelle (20), wobei der Gehäusekörper (10) zur Aufnahme der Batteriezelle (20) konfiguriert ist, wobei die Batteriezelle (20) Folgendes umfasst:
ein Gehäuse (21) mit einer Öffnung;
eine Elektrodenbaugruppe (22) zur Aufnahme in dem Gehäuse (21), wobei die Elektrodenbaugruppe (22) einen Hauptkörperabschnitt (221) und eine Lasche (222) umfasst; und
eine Endabdeckungsbaugruppe (23), die eine Endabdeckung (231) und einen Elektrodenanschluss (232) umfasst, wobei die Endabdeckung (231) zum Abdecken der Öffnung konfiguriert ist, der Elektrodenanschluss (232) an der Endabdeckung (231) montiert ist und der Elektrodenanschluss (232) zum elektrischen Verbinden mit der Lasche (222) konfiguriert ist, wobei
die Endabdeckung (231) einen ersten Körper (2311) und einen ersten vorstehenden Abschnitt (2312) umfasst, wobei der erste Körper (2311) eine erste Innenfläche (2311a) und eine erste Außenfläche (2311b) aufweist, die in einer Dickenrichtung des ersten Körpers (2311) einander gegenüberliegend angeordnet sind, der erste vorstehende Abschnitt (2312) in einer vom Hauptkörperabschnitt (221) abweichenden Richtung von der ersten Außenfläche (2311b) vorsteht, ein erster vertiefter Abschnitt (2313), der in der vom Hauptkörperabschnitt (221) abweichenden Richtung von der ersten Innenfläche (2311a) zurückgesetzt ist, an einer dem ersten vorstehenden Abschnitt (2312) entsprechenden Position am ersten Körper (2311) ausgebildet ist, und der erste vertiefte Abschnitt (2313) zur Aufnahme zumindest eines Teils der Lasche (222) konfiguriert ist;
wobei die Batterie (100) ferner eine Wärmemanagementkomponente (50) umfasst, wobei die Wärmemanagementkomponente (50) an dem ersten Körper (2311) angebracht ist und die Wärmemanagementkomponente (50) zum Einstellen einer Temperatur der Batteriezelle (20) konfiguriert ist; und
wobei sich die Wärmemanagementkomponente (50) am Boden der Batteriezelle (20) befindet und die Wärmemanagementkomponente (50) zum Abstützen des ersten Körpers (2311) konfiguriert ist.

2. Batterie (100) nach Anspruch 1, wobei die erste Außenfläche (2311b) einen Wärmeableitungsbereich (2311c) umfasst, wobei eine Projektion des Wärmeableitungsbereichs (2311c) in der Dickenrichtung eine Projektion des ersten vorstehenden Abschnitts (2312) in der Dickenrichtung nicht überlappt und der Wärmeableitungsbereich (2311c) zum Anbringen an der Wärmemanagementkomponente (50) konfiguriert ist.

3. Batterie (100) nach Anspruch 1 oder 2, wobei der erste vertiefte Abschnitt (2313) eine erste Bodenfläche (2313a) aufweist; und
in der Dickenrichtung die erste Bodenfläche (2313a) weiter vom Hauptkörperabschnitt (221) entfernt ist als die erste Außenfläche (2311b).

4. Batterie (100) nach einem der Ansprüche 1 bis 3, wobei der Elektrodenanschluss (232) an dem ersten vorstehenden Abschnitt (2312) montiert ist.

5. Batterie (100) nach Anspruch 4, wobei die Endabdeckungsbaugruppe (23) zwei Elektrodenanschlüsse (232) umfasst und die beiden Elektrodenanschlüsse (232) an einem ersten vorstehenden Abschnitt (2312) montiert sind; oder
die Endabdeckungsbaugruppe (23) zwei Elektrodenanschlüsse (232) und zwei erste vorstehende Abschnitte (2312) umfasst, die entlang einer Längenrichtung des ersten Körpers (2311) angeordnet sind, wobei die beiden Elektrodenanschlüsse (232) jeweils an den beiden ersten vorstehenden Abschnitten (2312) montiert sind.

6. Batterie (100) nach einem der Ansprüche 1 bis 5, wobei die Endabdeckungsbaugruppe (23) ferner ein erstes Isolierteil (235) umfasst; und das erste Isolierteil (235) an einer dem Hauptkörperabschnitt (221) zugewandten Seite der Endabdeckung (231) angeordnet ist und das erste Isolierteil (235) zum Isolieren der Endabdeckung (231) von der Elektrodenbaugruppe (22) konfiguriert ist.

7. Batterie (100) nach einem der Ansprüche 1 bis 6, wobei die Batteriezelle (20) ferner ein Stromsammelelement (234) umfasst und der Elektrodenanschluss (232) über das Stromsammelelement (234) elektrisch mit der Lasche (222) verbunden ist, wobei
die Lasche (222) einen ersten Verbindungsabschnitt (2221) zum Verbinden mit dem Stromsammelelement (234) umfasst und mindestens ein Teil des ersten Verbindungsabschnitts (2221) in dem ersten vertieften Abschnitt (2313) aufgenommen ist; und
wobei das Stromsammelelement (234) eine dritte Innenfläche (2341) aufweist, die dem Hauptkörperabschnitt (221) zugewandt ist, wobei die dritte Innenfläche (2341) weiter vom Hauptkörperabschnitt (221) entfernt ist als die erste Innenfläche (2311a).

8. Batterie (100) nach einem der Ansprüche 1 bis 7, wobei der erste vorstehende Abschnitt (2312) eine vom ersten Körper (2311) abweichende dritte Außenfläche (2312a) und die Wärmemanagementkomponente (50) eine vom ersten Körper (2311) abweichende vierte Außenfläche (52) aufweist; und
in der Dickenrichtung die vierte Außenfläche (52) näher am Hauptkörperabschnitt (221) liegt als die dritte Außenfläche (2312a) oder die vierte Außenfläche (52) bündig mit der dritten Außenfläche (2312a) abschließt.

9. Batterie (100) nach einem der Ansprüche 1 bis 8, wobei die Batterie (100) ferner ein zweites Isolierteil (60) umfasst, wobei in der Dickenrichtung das zweite Isolierteil (60) auf einer vom Hauptkörperabschnitt (221) abweichenden Seite des ersten Körpers (2311) angeordnet ist und das zweite Isolierteil (60) die Wärmemanagementkomponente (50) und zumindest einen Teil des ersten vorstehenden Abschnitts (2312) abdeckt; und
wobei das zweite Isolierteil (60) mit einem Durchgangsloch (61) versehen ist, durch das sich der Elektrodenanschluss (232) nach außen erstrecken kann.

10. Batterie (100) nach einem der Ansprüche 1 bis 9, wobei zwischen der Wärmemanagementkomponente (50) und einer Bodenwand des Gehäusekörpers (10) ein Aufnahmespalt (53) ausgebildet ist und der Aufnahmespalt (53) zur Aufnahme zumindest eines Teils des Elektrodenanschlusses (232) konfiguriert ist; und
wobei die Batterie (100) ferner eine Buskomponente (40) umfasst, wobei die Buskomponente (40) dazu konfiguriert ist, eine elektrische Verbindung mehrerer Batteriezellen (20) zu realisieren; und
die Buskomponente (40) mit dem Elektrodenanschluss (232) verbunden ist und die Buskomponente (40) vollständig in dem Aufnahmespalt (53) aufgenommen ist; und
wobei die Wärmemanagementkomponente (50) mit einem Ausweichloch (51) versehen ist, wobei das Ausweichloch (51) zur Aufnahme zumindest eines Teils des ersten vorstehenden Abschnitts (2312) konfiguriert ist.

11. Stromverbrauchende Vorrichtung, umfassend die Batterie nach einem der Ansprüche 1 bis 10.

## Revendications

1. Batterie (100), comprenant :
un corps de boîte (10) et une cellule de batterie (20), le corps de boîte (10) étant configuré pour accueillir la cellule de batterie (20), et la cellule de batterie (20) comprenant :
un boîtier (21) avec une ouverture ;
un ensemble d'électrode (22) pour être logé dans le boîtier (21), l'ensemble d'électrode (22) comprenant une portion de corps principal (221) et une languette (222) ; et
un ensemble de couvercle en bout (23), comprenant un couvercle en bout (231) et une borne d'électrode (232), le couvercle en bout (231) étant configuré pour recouvrir l'ouverture, la borne d'électrode (232) étant montée sur le couvercle en bout (231), et la borne d'électrode (232) étant configurée pour être connectée électriquement à la languette (222), dans laquelle
le couvercle en bout (231) comprend un premier corps (2311) et une première portion saillante (2312), le premier corps (2311) comporte une première surface interne (2311a) et une première surface externe (2311b) disposées à l'opposé l'une de l'autre dans une direction d'épaisseur du premier corps (2311), la première portion saillante (2312) fait saillie à partir de la première surface externe (2311b) dans une direction s'éloignant de la portion de corps principal (221), une première portion en retrait (2313), qui est en retrait par rapport à la première surface interne (2311a) dans la direction s'éloignant de la portion de corps principal (221), est formée à une position correspondant à la première portion saillante (2312) sur le premier corps (2311), et la première portion en retrait (2313) est configurée pour accueillir au moins une partie de la languette (222) ;
dans laquelle la batterie (100) comprend en outre un composant de gestion thermique (50), le composant de gestion thermique (50) est attaché au premier corps (2311), et le composant de gestion thermique (50) est configuré pour ajuster une température de la cellule de batterie (20) ; et
dans laquelle le composant de gestion thermique (50) est situé au fond de la cellule de batterie (20), et le composant de gestion thermique (50) est configuré pour supporter le premier corps (2311).

2. Batterie (100) selon la revendication 1, dans laquelle la première surface externe (2311b) comprend une zone de dissipation thermique (2311c), une projection de la zone de dissipation thermique (2311c) dans la direction d'épaisseur ne chevauche pas une projection de la première portion saillante (2312) dans la direction d'épaisseur, et la zone de dissipation thermique (2311c) est configurée pour être fixée au composant de gestion thermique (50).

3. Batterie (100) selon la revendication 1 ou 2, dans laquelle la première portion en retrait (2313) comporte une première surface inférieure (2313a) ; et
dans la direction d'épaisseur, la première surface inférieure (2313a) est plus éloignée de la portion de corps principal (221) que la première surface externe (2311b).

4. Batterie (100) selon l'une quelconque des revendications 1 à 3, dans laquelle la borne d'électrode (232) est montée sur la première portion saillante (2312).

5. Batterie (100) selon la revendication 4, dans laquelle l'ensemble de couvercle en bout (23) comprend deux bornes d'électrode (232), et les deux bornes d'électrode (232) sont montées sur une première portion saillante (2312) ; ou l'ensemble de couvercle en bout (23) comprend deux bornes d'électrode (232) et deux premières portions saillantes (2312) disposées selon une direction de longueur du premier corps (2311), et les deux bornes d'électrode (232) sont respectivement montées sur les deux premières portions saillantes (2312).

6. Batterie (100) selon l'une quelconque des revendications 1 à 5, dans laquelle l'ensemble de couvercle en bout (23) comprend en outre une première pièce isolante (235) ; et
la première pièce isolante (235) est disposée sur un côté du couvercle en bout (231) faisant face à la portion de corps principal (221), et la première pièce isolante (235) est configurée pour isoler le couvercle en bout (231) de l'ensemble d'électrode (22).

7. Batterie (100) selon l'une quelconque des revendications 1 à 6, dans laquelle la cellule de batterie (20) comprend en outre un collecteur de courant (234), et la borne d'électrode (232) est connectée électriquement à la languette (222) par l'intermédiaire du collecteur de courant (234), dans laquelle
la languette (222) comprend une première portion de liaison (2221) destinée à être reliée au collecteur de courant (234), et au moins une partie de la première portion de liaison (2221) est logée dans la première portion en creux (2313) ; et,
dans laquelle le collecteur de courant (234) comporte une troisième surface interne (2341) faisant face à la portion de corps principal (221), et la troisième surface interne (2341) est plus éloignée de la portion de corps principal (221) que la première surface interne (2311a).

8. Batterie (100) selon l'une quelconque des revendications 1 à 7, dans laquelle la première portion saillante (2312) comporte une troisième surface externe (2312a) s'éloignant du premier corps (2311), et le composant de gestion thermique (50) comporte une quatrième surface externe (52) s'éloignant du premier corps (2311) ; et
dans la direction d'épaisseur, la quatrième surface externe (52) est plus proche de la portion de corps principal (221) que la troisième surface externe (2312a), ou la quatrième surface externe (52) affleure la troisième surface externe (2312a).

9. Batterie (100) selon l'une quelconque des revendications 1 à 8, dans laquelle la batterie (100) comprend en outre une deuxième pièce isolante (60), et dans la direction d'épaisseur, la deuxième pièce isolante (60) est disposée sur un côté du premier corps (2311) s'éloignant de la portion de corps principal (221), et la deuxième pièce isolante (60) recouvre le composant de gestion thermique (50) et au moins une partie de la première portion saillante (2312) ; et,
dans laquelle la deuxième pièce isolante (60) est pourvue d'un trou traversant (61) permettant au terminal d'électrode (232) de s'étendre vers l'extérieur.

10. Batterie (100) selon l'une quelconque des revendications 1 à 9, dans laquelle un espace de logement (53) est formé entre le composant de gestion thermique (50) et une paroi inférieure du corps de boîte (10), et l'espace de logement (53) est configuré pour accueillir au moins une partie de la borne d'électrode (232) ; et,
dans laquelle la batterie (100) comprend en outre un composant de bus (40), le composant de bus (40) étant configuré pour réaliser la connexion électrique d'une pluralité de cellules de batterie (20) ; et
le composant de bus (40) est connecté à la borne d'électrode (232), et le composant de bus (40) est entièrement logé dans l'espace de logement (53) ; et, dans laquelle le composant de gestion thermique (50) est pourvu d'un trou d'évitement (51), le trou d'évitement (51) étant configuré pour accueillir au moins une partie de la première portion saillante (2312).

11. Dispositif de consommation d'énergie, comprenant la batterie selon l'une quelconque des revendications 1 à 10.
